# EUROPÄISCHE PATENTSCHRIFT

(11) **EP 4 406 785 B1**
(45) Veröffentlichungstag und Bekanntmachung des Hinweises auf die Patenterteilung: **04.12.2024**
(21) Anmeldenummer: 23153319.1
(22) Anmeldetag: 25.01.2023
(51) Int. Cl.: B60R 19/18

(54) **QUERTRÄGERANORDNUNG MIT PERFORIERTEN BEREICHEN**
CROSS BEAM ASSEMBLY WITH PERFORATED ZONES
ENSEMBLE DE TRAVERSE AVEC ZONES PERFORÉES

(43) Veröffentlichungstag der Anmeldung: 31.07.2024
(73) Patentinhaber: Benteler Automobiltechnik GmbH, 33102 Paderborn (DE)
(72) Erfinder: FROST, Georg, 32839 Steinheim (DE)
(74) Vertreter: Osterhoff, Utz

(56) Entgegenhaltungen:
- FR-A1- 2 536 711
- JP-A- 2008 110 679
- JP-A- 2012 206 538
- KR-A- 20090 115 522
- US-A1- 2006 186 680

## Beschreibung

Die vorliegende Erfindung betrifft eine Querträgeranordnung gemäß den Merkmalen im Oberbegriff von Patentanspruch 1.

Aus dem Stand der Technik sind Querträgeranordnungen bekannt, die frontseitig bzw. endseitig an Kraftfahrzeugen eingesetzt werden. Eine solche Querträgeranordnung weist einen Querträger auf. Der Querträger erstreckt sich im Wesentlichen über einen Großteil der Kraftfahrzeugbreite in Kraftfahrzeugquerrichtung.

Der Querträger selbst ist an Längsträgern, insbesondere unter Eingliederung von Crashboxen an Längsträgern angeordnet. Die Crashboxen sind auf die Kraftfahrzeugquerrichtung bezogen jeweils endseitig an dem Querträger angeordnet. Die Crashboxen werden dann frontseitig am Längsträger des Kraftfahrzeuges bzw. der Kraftfahrzeugkarosserie befestigt. Der Querträger kann jeweils noch mit Endbereichen seitlich über die Crashboxen überstehen.

Beispielsweise ist aus der JP 2008 110679 A eine Querträgeranordnung bekannt, die ein Lochmuster im Querträger in Anbindungsbereich einer Crashbox aufweist, was im Crashfall zu einer Deformation des Querträgers führt. Solche Anordnungen sind auch aus der JP 2012 206538 A1, der US 2006/186680 A1 sowie der KR 2009 011 5522 A bekannt.

Bei einem Anprall an den Querträger steht dieser im Zielkonflikt.

Zum einen muss der Querträger eine hohe Biegesteifigkeit aufweisen um ein Einknicken bzw. eine Intrusion eines Gegenstandes zu vermeiden. Die Aufprallenergie wird in den Crashboxen dann in Umformarbeit gewandelt und somit die Crashintensität gedämpft.

Zum anderen soll der Querträger selbst sowie evtl. Kühler oder Antriebsaggregate schützen, jedoch auch zumindest in bestimmten Crashszenarien Energie abbauen und insbesondere bei einem sogenannten RCAR-Bumper Crashtest oder zentralen Pfahltest sich deformieren ohne vollständig zu kollabieren.

Aufgabe der vorliegenden Erfindung ist es daher eine Querträgeranordnung aufzuzeigen, die verbesserte Crasheigenschaften durch Deformation des Querträgers selbst hervorruft, gleichzeitig jedoch ein hohes Eigensteifigkeitsverhalten aufweist.

Die zuvor genannte Aufgabe wird erfindungsgemäß mit einer Querträgeranordnung mit den Merkmalen im Anspruch 1 gelöst.

Vorteilhafte Ausgestaltungsvarianten der vorliegenden Erfindung sind Gegenstand der abhängigen Ansprüche.

Die Stoßfängeranordnung ist über Crashboxen an einem Kraftfahrzeug gekoppelt. Sie weist einen Querträger auf. Nachfolgend wird der Querträger Hauptquerträger genannt. Es kann im Sinne der Erfindung ein weiterer Hilfsquerträger angeordnet sein. Dieser ist insbesondere auf die Kraftfahrzeugvertikalrichtung unterhalb des Hauptquerträgers angeordnet. Der Hauptquerträger selber ist durch ein im Querschnitt hohles Profil gebildet. Insbesondere handelt es sich dabei um ein im Querschnitt geschlossenes hohles Profil. Der Querträger ist aus einer Leichtmetalllegierung hergestellt. Hierbei handelt es sich insbesondere um eine Aluminiumlegierung. Insbesondere ist das Hohlprofil als Strangpressprofil hergestellt.

Erfindungsgemäß ist nunmehr vorgesehen, dass an einem Obergurt und an einem Untergurt des Querträgers in Längsrichtung des Hauptquerträgers auf beiden Seiten parallel zueinander beabstandet jeweils ein geschwächter Bereich ausgebildet ist, wobei der geschwächte Bereich durch ein Lochmuster gebildet ist und die jeweilige Breite des geschwächten Bereiches zwischen 20 mm und 150 mm beträgt, wobei die Breite des geschwächten Bereiches größer gleich 1,5mal der Tiefe des geschwächten Bereichs ist. Besonders bevorzugt ist die Breite größer gleich 2mal, insbesondere größer gleich 2,5mal der Tiefe des geschwächten Bereiches.

Insbesondere entspricht dabei die Tiefe des geschwächten Bereiches mindestens 50 %, bevorzugt mehr als 60 %, insbesondere mehr als 70 %, ganz besonders bevorzugt jedoch maximal 95 %, insbesondere weniger als 90 % der Tiefe des Hauptquerträgers in dem geschwächten Bereich auf Höhe des Längenabschnittes des geschwächten Bereiches.

Bevorzugt bzw. optional ergänzend oder alternativ kann auch die Breite des geschwächten Bereiches größer gleich der Tiefe des Hauptquerträgers in dem geschwächten Bereich sein.

Zunächst ist es erfindungsgemäß möglich, durch Fräsen bzw. Stanzen oder ein sonstiges spanabhebendes oder schneidetechnisches Verfahren möglich, den geschwächten Bereich sowohl geometrisch präzise als auch mit geringem Werkzeug- und Produktionsaufwand herzustellen. Durch den geschwächten Bereich deformiert sich der Querträger bei einem Anprall initial in sich selber bzw. in dem geschwächten Bereich. Durch die Tatsache, dass der geschwächte Bereich eine Breite aufweist, wobei die Breite in Kraftfahrzeugquerrichtung orientiert ist, die größer gleich der Tiefe des Querträgers in diesem Bereich ist, wird eine homogene bzw. gleichmäßige globale initiale Deformation des Querträgers in sich erzeugt. Bei einem schmaleren Bereich würde sich der Querträger unter Umständen initial durch einen Einknickvorgang deformieren.

Das Lochmuster selbst ist durch mindestens mehr als 3, bevorzugt mehr als 4, sogar mehr als 7 Löcher, bevorzugt zwischen 10 und 40 Löcher hergestellt. Die Löcher können in Reihen oder auch parallel versetzt zueinander angeordnet sein. Der Flächenanteil der Löcher in dem geschwächten Bereich beträgt bevorzugt zwischen 5 % und 50 %, insbesondere zwischen 10 % und 20 %. Die Löcher weisen bevorzugt einen Durchmesser zwischen 5 mm und 20 mm auf. Besonders bevorzugt zwischen 5 mm und 15 mm. Die Löcher sind ganz besonders bevorzugt als runde Löcher ausgebildet. Die Löcher können jedoch auch als Langlöcher oder ovale Löcher ausgebildet sein.

Das hohle Profil wird auch insbesondere als Hohlprofil bezeichnet. Das Hohlprofil kann insbesondere ein Mehrkammerhohlprofil sein. Besonders bevorzugt ist innerhalb des Hohlprofils eine Trennwand angeordnet, wobei die Trennwand auf die Kraftfahrzeughorizontalrichtung bezogen horizontal orientiert verläuft. Die Trennwand ist in dem geschwächten Bereich selbst nicht geschwächt bzw. perforiert oder deformiert.

Besonders bevorzugt weisen die Vorderwand bzw. die Rückwand des Hohlprofils in dem geschwächten Bereich ebenfalls einen unterbrechungsfreien Verlauf auf. Dies bedeutet, dass keine Verprägungen, keine Unterbrechungen, keine Ausnehmungen oder ähnliches in Vorderwand und/oder Rückwand im geschwächten Bereich homogen durchlaufend sind. Im Falle, dass der Hauptquerträger eine Krümmung um die Kraftfahrzeugvertikalrichtung aufweist, weisen somit Vorderwand und/oder Rückwand des Querträgers auch im geschwächten Bereich einen gleichmäßigen Verlauf entlang der Krümmung auf.

Weiterhin bevorzugt beträgt die Breite des geschwächten Bereichs zwischen 30 mm und 100 mm. Alternativ oder ergänzend ist weiterhin die Breite des geschwächten Bereichs größer als die Tiefe des Hauptquerträgers in dem geschwächten Bereich. Die Tiefe des Hauptquerträgers wird orthogonal zur Mittellängslinie des Hauptquerträgers gemessen. Diese Orthogonale ist im Wesentlichen in Kraftfahrzeuglängsrichtung orientiert. Je nach Krümmungswinkel bzw. Krümmungsverlauf kann somit die Orthogonale in einem Winkel zur Kraftfahrzeuglängsrichtung verlaufen. Besonders bevorzugt ist die Breite größer das 1,1 fache, insbesondere das 1,2fache der Tiefe des Hauptquerträgers im geschwächten Bereich. Durch die relativ bezogen, große Breite des Hauptquerträgers im geschwächten Bereich wird zum einen eine Verformung des Querträgers in sich ermöglicht. Hierdurch wird das Energieaufnahmevermögen durch den Querträger gesteigert. Ebenfalls wird ein Einknicken bzw. Knickverhalten verhindert, so dass eine gleichmäßige homogenere Deformation des Querträgers in sich erfolgt.

In Draufsicht kann das Lochmuster auch beispielsweise durch unterschiedliche Ausbildungen der Löcher selbst, durch unterschiedliche Durchmesser bzw. unterschiedliche Abstände der Löcher ausgebildet sein.

Die Breite eines jeweils geschwächten Bereiches ist jedoch kleiner gleich dem 0,1fachen des inneren Abstandes der Crashboxen in Kraftfahrzeugquerrichtung zueinander. Hierdurch wird wiederum sichergestellt, dass der geschwächte Bereich nicht zu breit ist, so dass die Schwächung keinen zu großen Teil des Längsverlaufs des Hauptquerträgers einnimmt.

Weiterhin besonders bevorzugt sind die vordere Wand und/oder die hintere Wand des Hauptquerträgers bezogen auf die Kraftfahrzeugvertikalrichtung im Wesentlichen vertikal orientiert angeordnet.

Es hat sich als weiterhin besonders vorteilig erwiesen, dass das Lochmuster des geschwächten Bereiches bezogen auf die Kraftfahrzeuglängsrichtung einen Abstand zur Vorderwand und/oder zur Hinterwand aufweist, wobei besonders bevorzugt der Abstand mindestens 0,1 der Tiefe des Hauptquerträgers in diesem Bereich ist. Somit wird im Bereich der Vorderwand bzw. im Bereich der Hinterwand eine jeweilige Kante sichergestellt. Diese Kante unterstützt das homogene Verformungsverhalten dergestalt, dass gerade kein Einknicken erfolgt. Würden die jeweiligen Lochmuster bis nahezu an die Vorderwand bzw. an die Hinterwand führen, so könnte hier ein Einknicken unterstützt werden, was erfindungsgemäß gerade vermieden werden soll, da ein homogenes Verformungsverhalten gewünscht ist.

Weiterhin besonders bevorzugt ist der Hauptquerträger aus einer Aluminiumlegierung, hergestellt mit einer Dehngrenze RP 0,2 von 200 MPa bis 450 MPa, insbesondere 250 MPa bis 350 MPa. Eine derartige Aluminiumlegierung hat sich als vorteilig erwiesen in Verbindung mit dem geschwächten Bereich. Der geschwächte Bereich ist bezogen auf den inneren Abstand der Crashboxen in Kraftfahrzeugquerrichtung zueinander in einem Bereich von 0,1 bis 0,4 des Abstandes angeordnet. Auf jeder Seite des Hauptquerträgers bezogen auf die Mittenquerschnittsebene ist somit ein geschwächter Bereich angeordnet.

Der Hauptquerträger kann weiterhin einen gekrümmten Verlauf aufweisen. Die Krümmung ist dann um die Kraftfahrzeugvertikalrichtung bezogen. Der Hauptquerträger weist weiterhin besonders bevorzugt über seinen Längsverlauf im Wesentlichen ein konstantes Querschnittsprofil auf. Dies bedeutet, das Querschnittsprofil ändert sich hinsichtlich der Querschnittsfläche und/oder Querschnittsform im Wesentlichen nicht.

Damit ein homogenes Verformungsverhalten weiter bevorzugt erreicht wird, hat sich als vorteilig erwiesen, wenn die Crashboxen in einem Winkel größer 0° zueinander verlaufen. Die Crashboxen sind somit, auf die Kraftfahrzeuglängsrichtung bezogen, in Vorspur zueinander angeordnet. Mithin sind die Crashboxen nach vorne außen orientiert angeordnet bzw. verlaufen die Crashboxen eben nicht parallel, sondern schräg nach vorne zueinander. Hierdurch wird das homogene Verformungsverhalten des Hauptquerträgers ebenfalls bevorzugt gesteigert.

Weiterhin besonders bevorzugt ist an der Rückwand des Hauptquerträgers, bezogen auf die Kraftfahrzeugquerrichtung auf Höhe des geschwächten Bereiches, eine Eindrückung bzw. Einformung ausgebildet. Dies fördert ebenfalls das homogene Verformungsverhalten des Hauptquerträgers im Crashfalle und vermeidet ein lokales Einknicken.

Weitere Vorteile, Merkmale, Eigenschaften und Aspekte der vorliegenden Erfindung sind Gegenstand der nachfolgenden Beschreibung. Bevorzugte Ausgestaltungsvarianten werden in schematischen Figuren dargestellt. Diese dienen dem einfacheren Verständnis der Erfindung. Es zeigen:
- Figur 1: eine erfindungsgemäße Querträgeranordnung in perspektivischer Ansicht,
- Figur 2: eine alternative Ausgestaltung zu Figur 1,
- Figur 3: ein Crashszenario,
- Figur 4: einen Querträger nach dem Crashfall,
- Figur 5: einen erfindungsgemäßen Querträger und einen Querträger nach dem Stand der Technik,
- Figur 6: eine Querschnittsansicht gemäß der Schnittlinie VII-VII aus Figur 1.
- Figur 7a, b: verschiedene Draufsichten auf ein jeweiliges Lochmuster im geschwächten Bereich mit asymmetrischer Ausgestaltung.

In den Figuren werden für gleiche oder ähnliche Bauteile dieselben Bezugszeichen verwendet, auch wenn eine wiederholte Beschreibung aus Vereinfachungsgründen entfällt.

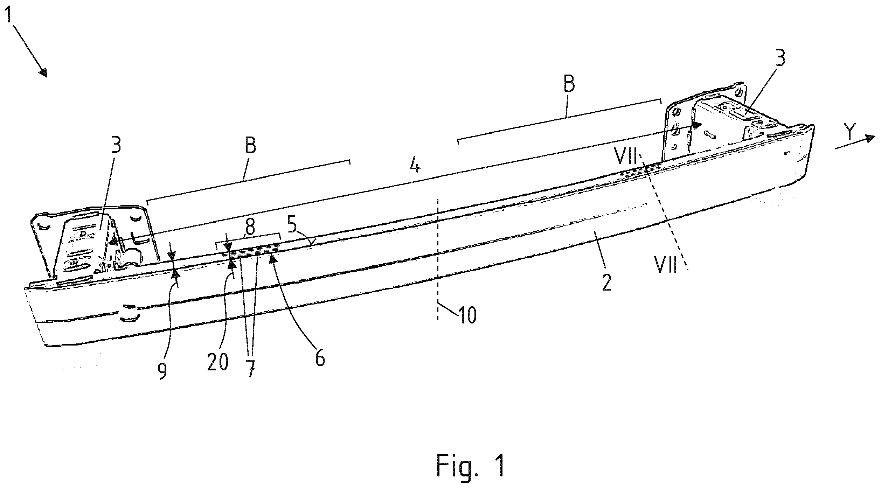

Figur 1 zeigt eine erfindungsgemäße Querträgeranordnung 1 in perspektivischer Ansicht. Diese weist einen Hauptquerträger 2 auf, der sich im Wesentlichen in Kraftfahrzeugquerrichtung Y mit seiner Längsrichtung erstreckt. In einem jeweiligen Endbereich sind Crashboxen 3 angeordnet, über welche der Hauptquerträger 2 an einem nicht näher genannten Kraftfahrzeug befestigt wird. Die Crashboxen 3 weisen einen inneren Abstand 4 zueinander auf. An einem Obergurt 5 ist jeweils ein geschwächter Bereich 6 in Form eines Lochmusters 7 ausgebildet. Der geschwächte Bereich 6 weist eine Breite 8 auf, die größer ist als die Tiefe 9 des Querträgers im geschwächten Bereich 6. Zu anschaulichen Zwecken ist die Tiefe 9 leicht versetzt dargestellt. Die Anordnung des geschwächten Bereiches 6 ist bezogen auf eine Mittenquerschnittsebene 10 des Hauptquerträgers 2 in einem Bereich B von dem 0,1fachen bis 0,4fachen des inneren Abstandes 4 der Crashboxen 3 zueinander angeordnet. In Figur 1 dargestellt, eher im Bereich nach außen zu den Crashboxen 3 hin. Ferner ist die Tiefe 20 des geschwächten Bereiches 6 dargestellt. Die Breite 8 des geschwächten Bereiches 6 ist mindestens 1,5mal, bevorzugt mehr als 2mal, besonders bevorzugt mehr als 2,5mal größer als die Tiefe 20 des geschwächten Bereiches 6. Die Tiefe 20 des geschwächten Bereiches 6 wird im Wesentlichen in Kraftfahrzeuglängsrichtung X gemessen. Es ist auf jeder Seite ein geschwächter Bereich 6 dargestellt. Auch können auf jeder Seite zwei geschwächte Bereiche ausgebildet sein.

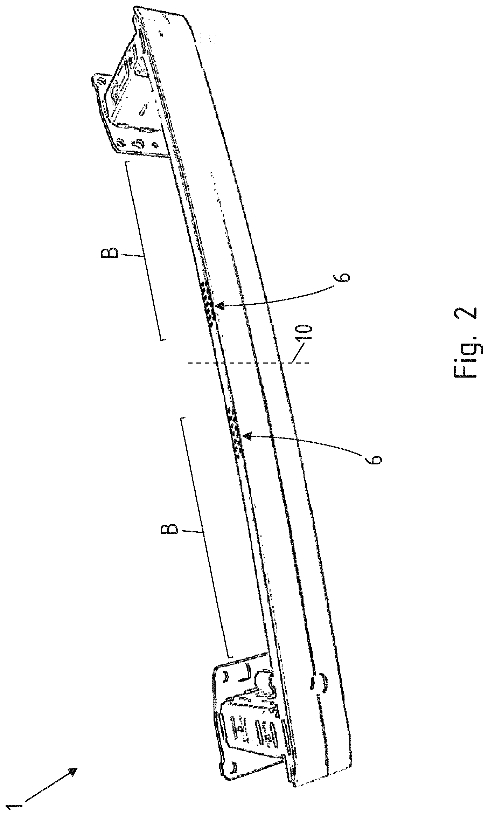

Figur 2 zeigt eine analoge Anordnung von Figur 1, wobei hier die geschwächten Bereiche 6 bezogen auf die Mittenquerschnittsebene 10 eher zur Mitte hingerichtet im Bereich B angeordnet sind. Erkennbar ist ferner in Figuren 1 und 2, dass die Vorderwand 15 im geschwächten Bereich 6 einen unterbrechungsfreien Verlauf aufweist. Darüber hinaus zeigt, dass die Tiefe 20 des Querträgers zwischen den Innenseiten der Crashboxen 3 über den Längsverlauf 12 des Querträgers im Wesentlichen konstant ist.

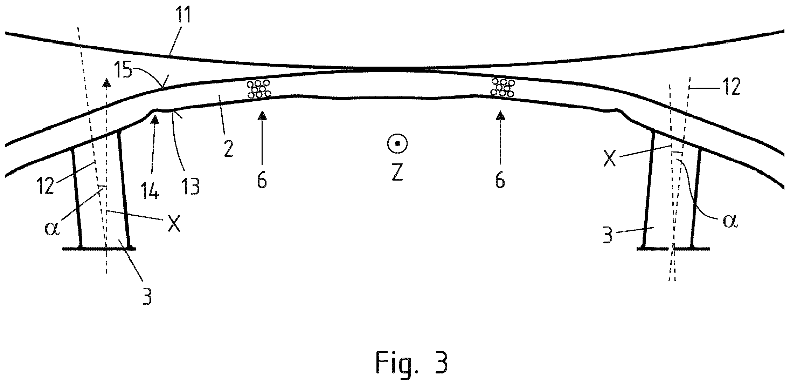

Figur 3 zeigt ein Crashszenario. Der Hauptquerträger 2 prallt auf ein Hindernis 11, hier bevorzugt einen anderen Querträger. Ferner ist die Längsorientierung der Crashboxen 3 zur Kraftfahrzeuglängsrichtung in einem Winkel α größer 0° angeordnet, somit sind die beiden Crashboxen 3 zueinander nach außen orientiert angeordnet bzw. stehen in Vorspur zueinander. Der Hauptquerträger 2 weist eine Krümmung um die Kraftfahrzeugvertikalrichtung Z auf. An der Rückwand 13 des Querträger kann bevorzugt eine Eindrückung 14 ausgebildet sein. Die Eindrückung 14 ist hier dargestellt in einem äußeren Bereich nahe der Crashbox 3 und somit nicht im geschwächten Bereich 6 angeordnet. Die Vorderwand 15 des Querträgers selbst ist im Wesentlichen durchgehend ausgebildet und weist einen unterbrechungsfreien Verlauf auf. Alternativ zu der Darstellung von Figur 3 können die Crashboxen auch parallel zueinander angeordnet sein. Der Winkel α beträgt somit 0°.

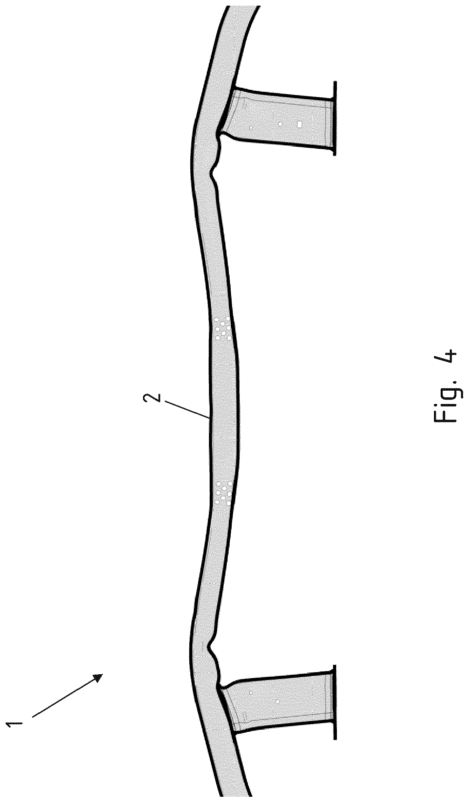

Figur 4 zeigt den Querträger nach dem Crashfall. Es ist ein homogenes Einformungsverhalten zu verzeichnen, ohne dass der Querträger einknickt oder in sonstiger Weise sich unbeabsichtigt deformiert.

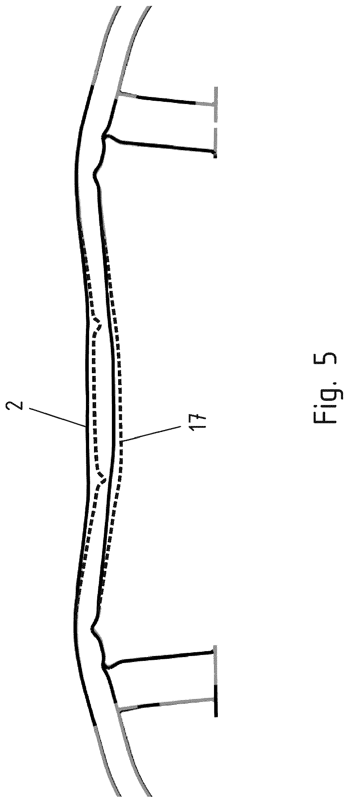

Eine solche unbeabsichtigte unkontrollierte Deformation ist beispielsweise in Figur 5 bei Querträgern mit durchgehendem Linienverlauf dargestellt. Dies ist ein Querträger ohne geschwächten Bereich 6. Dieser ist an einer Einknickstelle 16 der Vorderwand 15 eingeknickt unter nur mäßigem Aufprallenergieabbau.

Eine deutlich homogenere großflächigere und damit in Sachen Aufprallenergieabbau optimierte Deformation ist dargestellt in Figur 5. Hier ist gemäß der gestrichelten Linie ein Querträger nach dem Stand der Technik dargestellt. Dieser weist zwei geschwächte Bereiche durch außenmittige, vertikale Verprägungen in der Vorderwand auf und wird deutlich stärker deformiert als der erfindungsgemäße Hauptquerträger 2 mit ausgeblendeten außermittigen Lochmustern. Über den gesamten Querträgerverlauf ist das Energieaufnahmevermögen aufgrund der sehr lokalen Deformation schlechter.

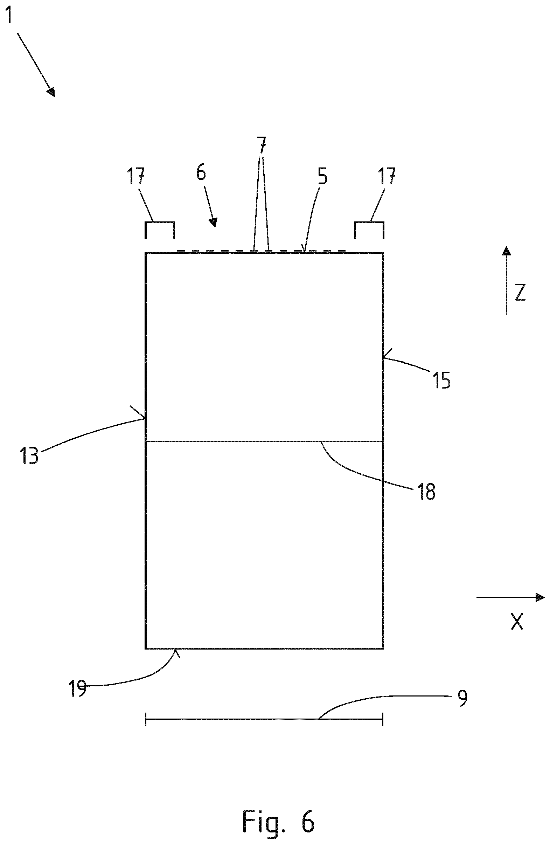

Figur 6 zeigt eine Querschnittsansicht gemäß der Schnittlinie VII-VII aus Figur 1. Das Lochmuster 7 des geschwächten Bereiches 6 ist dargestellt. Dieses Lochmuster 7 ist von einer Vorderwand 15 sowie von einer Rückwand 13 des Hauptquerträgers 2 jeweils beabstandet ausgebildet. Der Abstand 17 beträgt bevorzugt mehr als das 0,1fache der Tiefe 9 des Hauptquerträgers 2 im geschwächten Bereich 6. Somit entsteht eine Kante zwischen Obergurt 5 und Vorderwand 15 bzw. Obergurt 5 und Rückwand 13. Diese Kante verhindert ein vorschnelles Einknicken des Hauptquerträgers 2 in den geschwächten Bereichen 6.

Der Untergurt 19 ist in diesem Falle nicht mit einem Lochmuster 7 versehen. Ferner ist eine optionale Trennwand 18 in horizontaler Ausrichtung mithin parallel zu Obergurt 5 und Untergurt 19 angeordnet. Die Trennwand 18 ist jedoch auf die Kraftfahrzeugvertikalrichtung bezogen durchgängig verlaufend und weist ebenfalls keine Perforationsschwächung oder ähnliches auf.

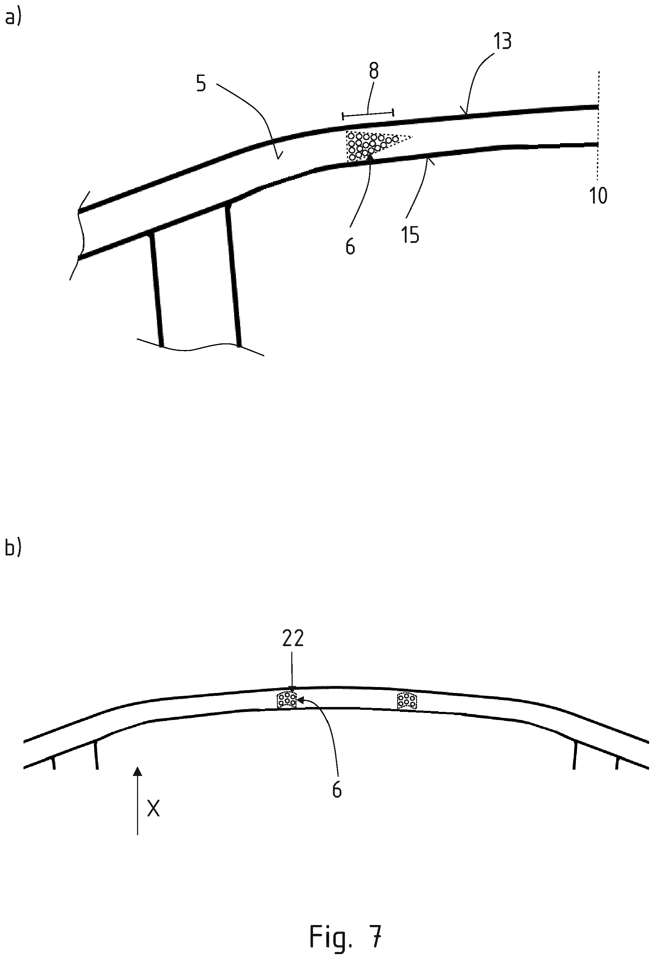

Im Falle von Figur 7a ist das Lochmuster im Wesentlichen dreieckförmig. Das Lochmuster verjüngt sich zu einer Mitte des Querträgers hin. Nach außen, zur Seite der Crashbox 3 hin, weist das Lochmuster eine größere Tiefe 20 auf als zur Mittenquerschnittsebene 10 hingerichtet. Hinsichtlich der Tiefe 20 des Lochmusters selbst kann ein Mittelwert gebildet werden, um eine Relation zu dem erfindungsgemäßen Merkmal der Breite 8 des geschwächten Bereiches 6 zu bekommen. Statt der Dreckeckspitze kann auch ein eher trapezförmiges Lochmuster eine ähnliche Wirkung erzielen.

Gemäß der Ausgestaltungsvariante von Figur 7b ist der jeweils geschwächte Bereich 6 derart asymmetrisch ausgebildet, dass die Lochmuster zueinander versetzt sind. Es ergibt somit im Wesentlichen in Draufsicht von einer rechteckigen Anordnung des geschwächten Bereichs abweichende Konfiguration. Ein bogenförmiger Abschnitt 22 ist auf die Kraftfahrzeuglängsrichtung X nach vorne hin gerichtet. Für alle vorgenannten Ausführungsvarianten, unabhängig von Figur 7b, gilt, dass eine auf die Kraftfahrzeuglängsrichtung X nach vorne gerichteter bogenförmiger Verlauf bzw. Abschnitt 22 des geschwächten Bereiches 6 sich vorteilig auf eine gleichmäßige bzw. homogen globale Verformung des Querträgers in sich auswirkt. Ein Einknicken des Querträgers aufgrund einer Verformung in sich wird durch den bogenförmigen Verlauf der vorderen Kante bzw. Vorderseite des geschwächten Bereiches 6 vermieden. Eine gleichmäßige Deformation des Querträgers in sich wird durch den bogenförmigen Verlauf begünstigt. Der bogenförmige Abschnitt 22 bzw. bogenförmige Verlauf kann dabei im Falle eines gekrümmten Querträgers dem Verlauf der Krümmung des Querträgers folgen. Der bogenförmige Abschnitt 22 bzw. bogenförmige Verlauf kann auch stärker gekrümmt sein als der bogenförmige Verlauf des Querträgers. Eine solche stärkere Krümmung ist in Figur 7b dargestellt.

### Bezugszeichen:

- 1 -: Querträgeranordnung
- 2 -: Hauptquerträger
- 3 -: Crashbox
- 4 -: innerer Abstand von 3
- 5 -: Obergurt
- 6 -: geschwächter Bereich
- 7 -: Lochmuster
- 8 -: Breite zu 6
- 9 -: Tiefe zu 6
- 10 -: Mittenquerschnittsebene zu 2
- 11 -: Hindernis
- 12 -: Längsverlauf zu 3
- 13 -: Rückwand
- 14 -: Eindrückung
- 15 -: Vorderwand
- 16 -: Einknickstelle
- 17 -: Abstand
- 18 -: Trennwand
- 19 -: Untergurt
- 20 -: Tiefe zu 6
- 21 -: Langlochreihe
- 22 -: bogenförmiger Abschnitt

- α -: Winkel
- X -: Kraftfahrzeuglängsrichtung
- Y -: Kraftfahrzeugquerrichtung
- Z -: Kraftfahrzeugvertikalrichtung
- B -: Bereich

## Patentansprüche

1. Stoßfängeranordnung, welche über Crashboxen (3) an einem Kraftfahrzeug gekoppelt ist, aufweisend einen Hauptquerträger (2), welcher durch ein im Querschnitt hohles Profil gebildet ist und aus einer Leichtmetalllegierung hergestellt ist und an einem Obergurt (5) und/oder einem Untergurt (19) in Längsrichtung des Hauptquerträgers (2) auf beiden Seiten, parallel zueinander beabstandet jeweils ein geschwächter Bereich (6) ausgebildet ist, wobei der geschwächte Bereich (6) durch ein Lochmuster (7) gebildet ist, **dadurch gekennzeichnet, dass** die jeweilige Breite (8) des geschwächten Bereiches (6) zwischen 20 mm und 150 mm beträgt, wobei die Breite (8) des geschwächten Bereiches (6) größer gleich 1,5mal der Tiefe (20) des geschwächten Bereichs (6) ist und dass bezogen auf eine Mittenquerschnittsebene (10) des Hauptträgers (2) in einem Bereich (B) von dem 0,1-fachen bis 0,4-fachen des Innenwandabstandes (4) der Crashboxen (3) ein jeweiliger geschwächter Bereich (6) angeordnet ist.

2. Stoßfängeranordnung nach Anspruch 1, **dadurch gekennzeichnet, dass** in dem Hohlprofil eine Trennwand (18) angeordnet ist, welche auf die Kraftfahrzeughorizontalrichtung (Y) bezogen horizontal orientiert verläuft.

3. Stoßfängeranordnung nach einem der vorgenannten Ansprüche, **dadurch gekennzeichnet, dass** die Breite (8) des geschwächten Bereiches (6) zwischen 30 mm und 100 mm beträgt und/oder dass die Breite (8) des geschwächten Bereiches (6) größer der Tiefe (9) des Hauptquerträgers (2) ist, insbesondere ist die Breite (8) größer 1,1fache der Tiefe des Hauptquerträgers (2).

4. Stoßfängeranordnung nach einem der vorgenannten Ansprüche, **dadurch gekennzeichnet, dass** das Lochmuster (7) aus mindestens 4 insbesondere mehr als 7 Löchern ausgebildet ist, wobei die Löcher vollständig ausgenommen sind.

5. Stoßfängeranordnung nach einem der vorgenannten Ansprüche, **dadurch gekennzeichnet, dass** die Breite (8) des geschwächten Bereiches (6) jeweils kleiner gleich das 0,1fache des inneren Abstandes (4) der Crashboxen (3) zueinander ist.

6. Stoßfängeranordnung nach einem der vorgenannten Ansprüche, **dadurch gekennzeichnet, dass** eine vordere Wand (15) und/oder eine hintere Wand (13) des Hauptquerträgers (2) bezogen auf die Kraftfahrzeugvertikalrichtung (Z) vertikal orientiert angeordnet sind.

7. Stoßfängeranordnung nach einem der vorgenannten Ansprüche, **dadurch gekennzeichnet, dass** der Hauptquerträger (2) über seinen Längsverlauf (12) im Wesentlichen ein konstantes Querschnittsprofil aufweist, mindestens ist jedoch das Querschnittsprofil des Hauptquerträgers (2) zwischen den Innenseiten, der Crashboxen (3) im Wesentlichen konstant.

8. Stoßfängeranordnung nach einem der vorgenannten Ansprüche, **dadurch gekennzeichnet, dass** der Hauptquerträger (2) einen gekrümmten Verlauf, um die Kraftfahrzeugvertikalrichtung (Z) aufweist.

9. Stoßfängeranordnung nach einem der vorgenannten Ansprüche, **dadurch gekennzeichnet, dass** der Hauptquerträger (2) als Strangpressprofil ausgebildet ist und eine Dehngrenze Rp von 200 MPa bis 450 MPa aufweist, insbesondere 250 MPa bis 350 MPa.

10. Stoßfängeranordnung nach einem der vorgenannten Ansprüche, **dadurch gekennzeichnet, dass** die Vorderwand (15) im geschwächten Bereich (6) einen unterbrechungsfreien Verlauf aufweist.

11. Stoßfängeranordnung nach einem der vorgenannten Ansprüche, **dadurch gekennzeichnet, dass** das Lochmuster (7) bezogen auf die Kraftfahrzeuglängsrichtung einen Abstand zur Vorderwand (15) und/oder Hinterwand (13) aufweist oder ein Abstand zu der Vorderwand kleiner als ein Abstand (17) zu der Rückwand (13) ausgebildet ist, wobei der Abstand (17) zur Rückwand bevorzugt mindestens doppelt so groß ist wie der Abstand (17) zur Vorderwand (15), bevorzugt ist der Abstand mindestens 0,1 der Tiefe (9) des Hauptquerträgers (2).

12. Stoßfängeranordnung nach einem der vorgenannten Ansprüche, **dadurch gekennzeichnet, dass** die Rückwand (13), insbesondere innerhalb eines Abstands von einer inneren Seite einer Crashbox von 150 mm eine Einformung und/oder Eindrückung (14) aufweist.

13. Stoßfängeranordnung nach einem der vorgenannten Ansprüche, **dadurch gekennzeichnet, dass** auf die Kraftfahrzeugquerrichtung Y bezogen, auf jeder Seite des Hauptquerträgers (2), bezogen auf die Mittenquerschnittsebene (10), zwei geschwächte Bereiche (6) angeordnet sind.

14. Stoßfängeranordnung nach einem der vorgenannten Ansprüche, **dadurch gekennzeichnet, dass** nur in dem Obergurt (5) oder nur in dem Untergurt (19) auf der jeweiligen Seite des Hauptquerträgers (2) ein geschwächter Bereich (6) ausgebildet ist.

15. Stoßfängeranordnung nach einem der vorgenannten Ansprüche, **dadurch gekennzeichnet, dass** der geschwächte Bereich (6) auf die Kraftfahrzeuglängsrichtung (X) bezogen einen nach vorne gerichteten bogenförmigen Abschnitt (22) aufweist.

## Claims

1. Bumper assembly which is coupled to a motor vehicle via crash boxes (3), having a main cross beam (2) which is formed by a profile which is hollow in cross-section and is produced from a light metal alloy, and wherein one weakened zone (6) is formed respectively on an upper flange (5) and/or a lower flange (19) on both sides, spaced apart parallel to one another, in the longitudinal direction of the main cross beam (2), wherein the weakened zone (6) is formed by a hole pattern (7), **characterised in that** the respective width (8) of the weakened zone (6) is between 20 mm and 150 mm, wherein the width (8) of the weakened zone (6) is greater than or equal to 1.5 times the depth (20) of the weakened zone (6), and **in that** a respective weakened zone (6) is arranged in a zone (B) of 0.1 times to 0.4 times the inner wall spacing (4) of the crash boxes (3) relative to a central cross-sectional plane (10) of the main beam (2).

2. Bumper assembly according to claim 1, **characterised in that** a partition wall (18) is arranged in the hollow profile, which runs horizontally oriented with respect to the horizontal direction (Y) of the vehicle.

3. Bumper assembly according to any one of the aforementioned claims, **characterised in that** the width (8) of the weakened zone (6) is between 30 mm and 100 mm and/or **in that** the width (8) of the weakened zone (6) is greater than the depth (9) of the main cross beam (2), in particular the width (8) is greater than 1.1 times the depth of the main cross beam (2).

4. Bumper assembly according to any one of the aforementioned claims, **characterised in that** the hole pattern (7) is formed from at least 4, in particular more than 7, holes, wherein the holes are completely recessed.

5. Bumper assembly according to any one of the aforementioned claims, **characterised in that** the width (8) of the weakened zone (6) is, respectively, less than or equal to 0.1 times the inner spacing (4) of the crash boxes (3) from one another.

6. Bumper assembly according to any one of the aforementioned claims, **characterised in that** a front wall (15) and/or a rear wall (13) of the main cross beam (2) are arranged in a vertical orientation with respect to the vertical direction (Z) of the motor vehicle.

7. Bumper assembly according to any one of the aforementioned claims, **characterised in that** the main cross beam (2) has a substantially constant cross-sectional profile over its longitudinal course (12), but at least the cross-sectional profile of the main cross beam (2) between the inner sides of the crash boxes (3) is substantially constant.

8. Bumper assembly according to any one of the aforementioned claims, **characterised in that** the main cross beam (2) has a curved course about the vertical direction (Z) of the motor vehicle.

9. Bumper assembly according to any one of the aforementioned claims, **characterised in that** the main cross beam (2) is formed as an extruded profile and has a yield strength Rp of 200 MPa to 450 MPa, in particular 250 MPa to 350 MPa.

10. Bumper assembly according to any one of the aforementioned claims, **characterised in that** the front wall (15) has an uninterrupted course in the weakened zone (6).

11. Bumper assembly according to any one of the aforementioned claims, **characterised in that** the hole pattern (7) has a distance to the front wall (15) and/or rear wall (13) with respect to the longitudinal direction of the motor vehicle, or a distance to the front wall is formed smaller than a distance (17) to the rear wall (13), wherein the distance (17) to the rear wall is preferably at least twice as large as the distance (17) to the front wall (15), preferably the distance is at least 0.1 of the depth (9) of the main cross beam (2).

12. Bumper assembly according to any one of the aforementioned claims, **characterised in that** the rear wall (13) has a depression and/or indentation (14), in particular within a distance of 150 mm from an inner side of a crash box.

13. Bumper assembly according to any one of the aforementioned claims, **characterised in that** two weakened zones (6) are arranged on each side of the main cross beam (2), relative to the central cross-sectional plane (10), with respect to the transverse direction Y of the motor vehicle.

14. Bumper assembly according to any one of the aforementioned claims, **characterised in that** a weakened zone (6) is formed only in the upper flange (5) or only in the lower flange (19) on the respective side of the main cross beam (2).

15. Bumper assembly according to any one of the aforementioned claims, **characterised in that** the weakened zone (6) has a forwardly directed arcuate section (22) with respect to the longitudinal direction (X) of the motor vehicle.

## Revendications

1. Agencement de pare-chocs qui est couplé à un véhicule automobile par le biais de boîtiers de protection contre les chocs (3), présentant une traverse principale (2) qui est formée par un profilé creux en section transversale et est fabriquée en un alliage de métal léger, et une zone affaiblie (6) est réalisée au niveau d'une bande supérieure (5) et/ou d'une bande inférieure (19) respectivement, dans la direction longitudinale de la traverse principale (2) sur les deux côtés, à distance parallèlement l'une à l'autre, dans lequel la zone affaiblie (6) est formée par un motif à trous (7), **caractérisé en ce que** la largeur (8) respective de la zone affaiblie (6) est comprise entre 20 mm et 150 mm, dans lequel la largeur (8) de la zone affaiblie (6) est supérieure ou égale à 1,5 fois la profondeur (20) de la zone affaiblie (6) et **en ce qu'**une zone affaiblie (6) respective est disposée par rapport à un plan médian de section transversale (10) du support principal (2) dans une zone (B) de 0,1 fois à 0,4 fois la distance de paroi intérieure (4) des boîtiers de protection contre les chocs (3).

2. Agencement de pare-chocs selon la revendication 1, **caractérisé en ce qu'**une paroi de séparation (18) est disposée dans le profilé creux, laquelle s'étend orientée à l'horizontale par rapport au sens horizontal du véhicule automobile (Y).

3. Agencement de pare-chocs selon l'une quelconque des revendications précédentes, **caractérisé en ce que** la largeur (8) de la zone affaiblie (6) est comprise entre 30 mm et 100 mm et/ou **en ce que** la largeur (8) de la zone affaiblie (6) est supérieure à la profondeur (9) de la traverse principale (2), en particulier la largeur (8) est supérieure à 1,1 fois la profondeur de la traverse principale (2).

4. Agencement de pare-chocs selon l'une quelconque des revendications précédentes, **caractérisé en ce que** le motif à trous (7) est réalisé avec au moins 4, en particulier plus de 7 trous, dans lequel les trous sont complètement évidés.

5. Agencement de pare-chocs selon l'une quelconque des revendications précédentes, **caractérisé en ce que** la largeur (8) de la zone affaiblie (6) est respectivement inférieure ou égale à 0,1 fois la distance intérieure (4) des boîtiers de protection contre les chocs (3) les uns par rapport aux autres.

6. Agencement de pare-chocs selon l'une quelconque des revendications précédentes, **caractérisé en ce qu'**une paroi avant (15) et/ou une paroi arrière (13) de la traverse principale (2) sont agencées orientées verticalement par rapport au sens vertical du véhicule automobile (Z).

7. Agencement de pare-chocs selon l'une quelconque des revendications précédentes, **caractérisé en ce que** la traverse principale (2) présente sur son étendue longitudinale (12) sensiblement un profilé de section transversale constant, au moins le profilé de section transversale de la traverse principale (2) entre les côtés intérieurs, des boîtiers de protection contre les chocs (3) est toutefois sensiblement constant.

8. Agencement de pare-chocs selon l'une quelconque des revendications précédentes, **caractérisé en ce que** la traverse principale (2) présente une étendue incurvée autour du sens vertical du véhicule automobile (Z).

9. Agencement de pare-chocs selon l'une quelconque des revendications précédentes, **caractérisé en ce que** la traverse principale (2) est réalisée comme profilé extrudé et présente une limite d'élasticité Rp de 200 MPa à 450 Mpa, en particulier de 250 MPa à 350 MPa.

10. Agencement de pare-chocs selon l'une quelconque des revendications précédentes, **caractérisé en ce que** la paroi avant (15) dans la zone affaiblie (6) présente une étendue sans interruption.

11. Agencement de pare-chocs selon l'une quelconque des revendications précédentes, **caractérisé en ce que** le motif à trous (7) présente par rapport au sens longitudinal du véhicule automobile une distance par rapport à la paroi avant (15) et/ou paroi arrière (13) ou une distance par rapport à la paroi avant est réalisée inférieure à une distance (17) par rapport à la paroi arrière (13), dans lequel la distance (17) par rapport à la paroi arrière est de préférence au moins deux fois plus grande que la distance (17) par rapport à la paroi avant (15), de préférence la distance est au moins 0,1 la profondeur (9) de la traverse principale (2).

12. Agencement de pare-chocs selon l'une quelconque des revendications précédentes, **caractérisé en ce que** la paroi arrière (13) présente en particulier jusqu'à une distance d'un côté intérieur d'un boîtier de protection contre les chocs de 150 mm un creux formé et/ou un enfoncement (14).

13. Agencement de pare-chocs selon l'une quelconque des revendications précédentes, **caractérisé en ce que** deux zones affaiblies (6) sont disposées par rapport au sens transversal du véhicule automobile Y, sur chaque côté de la traverse principale (2), par rapport au plan médian de section transversale (10).

14. Agencement de pare-chocs selon l'une quelconque des revendications précédentes, **caractérisé en ce qu'**une zone affaiblie (6) est réalisée seulement dans la bande supérieure (5) ou seulement dans la bande inférieure (19) sur le côté respectif de la traverse principale (2).

15. Agencement de pare-chocs selon l'une quelconque des revendications précédentes, **caractérisé en ce que** la zone affaiblie (6) présente par rapport au sens longitudinal du véhicule automobile (X) une section (22) arquée dirigée vers l'avant.
